# EUROPÄISCHE PATENTSCHRIFT

(11) **EP 1 026 375 B1**
(45) Veröffentlichungstag und Bekanntmachung des Hinweises auf die Patenterteilung: **01.06.2005**
(21) Anmeldenummer: 00101730.0
(22) Anmeldetag: 28.01.2000
(51) Int. Cl.: F01N 7/08, F16L 27/111

(54) **Leitungselement für Abgasleitungen von Kraftfahrzeugen**
Pipe member for exhaust conduits in motor vehicles
Elément de tuyau pour conduites de gaz d'échappement de vehicules automobiles

(30) Priorität: 05.02.1999 DE 29901957 U
(43) Veröffentlichungstag der Anmeldung: 09.08.2000
(73) Patentinhaber: Witzenmann GmbH, 75175 Pforzheim (DE)
(72) Erfinder: Wildermuth, Eberhard, Dr., 75181 Pforzheim (DE)
(74) Vertreter: Kaiser, Magnus, Dipl.-Phys.

(56) Entgegenhaltungen:
- WO-A-99/36684
- DE-A- 4 119 296
- DE-U- 29 503 927
- DE-U- 29 609 293
- US-A- 4 559 776
- US-A- 4 854 416
- US-A- 5 456 291

## Beschreibung

Die Erfindung betrifft ein Leitungselement aus Metall zur Abkopplung hochfrequenter Schwingungen bei Abgasleitungen von Kraftfahrzeug-Verbrennungsmotoren nach dem Oberbegriff des Patentanspruchs 1.

Bei Abgasleitungen von Kraftfahrzeugen ist es bekannt, in diese ein flexibles Leitungselement in Form eines gewellten Balges als Zwischenstück einzusetzen, um Bewegungen und Schwingungen aufzunehmen und von der Weiterleitung an benachbarte Bauteile abzukoppeln. Derartige Bewegungen und Schwingungen ergeben sich von Seiten der elastisch gelagerten Antriebsmaschine, infolge von Lastwechselreaktionen im normalen Fahrbetrieb oder auch aus temperaturbedingten Längenänderungen innerhalb der Abgasleitung. Die Weiterleitung dieser Bewegungen und Schwingungen an das Fahrzeug soll so weit wie möglich unterbunden werden, an dessen Boden die Abgasleitung gegebenenfalls unter Zwischenschaltung elastischer Stützteile befestigt ist.

Diese bekannten Zwischenstücke haben eine beträchtliche Länge, um ihnen eine ausreichende Flexibilität zur Aufnahme von Relativbewegungen zwischen den an sie angrenzenden Teilen der Abgasleitung zu geben, ihre Steifigkeit insbesondere in Axialrichtung ist also vergleichsweise niedrig gehalten, um Materialermüdung und daraus resultierende Brüche im Bereich des Zwischenstückes zu verhindern. Soweit die Zwischenstücke gleichzeitig Schwingungen abkoppeln, kann dies folglich nur für Frequenzen im Bereich bis etwa 200/250 Hz gelten, da oberhalb dieses Frequenzbereiches die Zwischenstücke selbst zu Eigenschwingungen angeregt werden. Hierbei kann es dann notwendig werden, die Zwischenstücke entlang ihres gewellten Bereiches von zusätzlichen, schwingungsdämpfenden Materialien in Form metallischer Dämpfungskissen oder dergleichen zu umgeben.

Die US-A-5 456 291 offenbart ein solches Leitungselement zur Abkopplung von Schwingungen in Abgasleitungen, mit einem ringgewellten Metallbalg und einem umhüllenden, gegebenenfalls auch formschlüssig aufgesetzten Gestrickemantel. Dieses bekannte Leitungselement ist relativ lang, hochflexibel und beweglich, denn es soll alle Bewegungen des Motors und typische Motorschwingungen unter 200 Hz, insbesondere im Bereich zwischen 150 Hz und 200 Hz aufnehmen, wobei der umhüllende Gestrickemantel in die Wellentäler des Balges eingezogen ist, damit er dessen Bewegungen besser mitmacht ohne diese zu dämpfen.

Auch in der DE 295 03 927 U ist ein solches Leitungselement zur Abkopplung von Schwingungen in Abgasleitungen beschrieben, das einen ringgewellten Metallbalg und einen eng anliegenden Gestrickeschlauch umfasst, der auch in den Raum zwischen den Wellenbergen radial eingezogen verlaufen und somit formschlüssig auf den Balg aufgesetzt sein kann. Das Vorsehen eines Gestrickeschlauchs soll ermöglichen, dass der Balg eine niedrige Federrate aufweisen kann, so dass das Leitungselement insgesamt sehr weich auf Bewegungen des elastisch gelagerten Motors, temperaturbedingte Längenänderungen der Abgasleitung und Schlechtweganregungen reagiert und diese Bewegungen abkoppelt.

Die DE 41 19 296 A beschreibt eine Klemmverbindung zwischen einem Wellrohr und einem Anschlussstutzen unter Verwendung eines Wulstes und einer Spannschelle.

US-A-4 559 776 offenbart ein Leitungselement mit kurzem Balg.

Nun treten jedoch inzwischen vermehrt seitens des Antriebs verursachte hochfrequente Schwingungen auf durch die Verwendung von Abgasturboladern oder Kompressoren, die mit sehr hohen Drehzahlen laufen und durch ihre Unwuchten die hochfrequenten Schwingungen erzeugen. Darüber hinaus werden durch die Verbrennungsvorgänge verbunden mit dem Öffnen der Auslassventile hochfrequente Druckpulsationen im an den Motor anschließenden Abgaskrümmer sowie der weiterführenden Abgasanlage erzeugt. Den durch diese hochfrequenten Schwingungen bzw. Druckpulsationen induzierten Körperschall vermögen die bekannten Zwischenstücke nicht zu dämpfen bzw. abzukoppeln. Vielmehr breitet sich der Körperschall in einem Frequenzbereich von 1000 Hz bis etwa 4000 Hz über die Abgasanlage aus und führt vor allem bei den Gehäusen der Katalysatoren und Schalldämpfer zur Abstrahlung von Luftschall.

Aufgabe der Erfindung ist es, für die Abgasleitung von Kraftfahrzeug-Verbrennungsmotoren ein Leitungselement anzugeben, durch das hochfrequente Schwingungen der genannten Art abkoppelbar sind und dadurch an der Weiterleitung zum Fahrgastraum und der Erzeugung von Luftschallabstrahlung gehindert sind.

Gelöst ist diese Aufgabe erfindungsgemäß durch ein Leitungselement mit den Merkmalen des Patentanspruches 1. Vorteilhafte Ausgestaltungen dieses Leitungselemtentes finden sich in den Patentansprüchen 2 bis 16.

Ein solches erfindungsgemäßes Leitungselement, das zusätzlich zu dem eingangs diskutierten Zwischenstück in die Abgasleitung einzusetzen ist, hat die Wirkung, dass nunmehr auch hochfrequente Schwingungen gesondert abgekoppelt werden können, wie sie insbesondere durch den Betrieb und die Unwuchten von Abgasturboladern oder Kompressoren auftreten. Dabei ergibt sich aus der Kürze und hohen Steifigkeit des verwendeten Balges, dass die Abgasleitung in dessen Bereich keiner zusätzlichen Aufhängung oder Abstützung bedarf, da das Balgelement von sich aus die angrenzenden Teile der Abgasleitung tragen kann.

Durch das erfindungsgemäße Bauteil ergibt sich nun aber auch die Möglichkeit, weniger gut ausgewuchtete Turbolader oder Kompressoren zu verwenden, sodass die teilweise erheblich unternommenen Anstrengungen für ein möglichst gutes Auswuchten dieser Lader und die damit verbundenen Kosten deutlich reduziert werden können.

Die Wellenzahl des Balges liegt erfindungsgemäß in einem Bereich von zwei bis sieben Wellen, wobei vorteilhafterweise eine Wellenzahl von drei bis fünf Wellen Verwendung findet. Außerdem hat es sich als zweckmäßig erwiesen, die Gesamtwandstärke des Balges im Bereich von 0,7 bis 1,6 mm, bevorzugt im Bereich von 0,9 bis 1,2 mm zu wählen.

Das erfindungsgemäße Leitungselement kann mit wenigstens einer der weiterführenden Teile der Abgasleitung verschweißt sein, wozu es zweckmäßigerweise auf wenigstens einer Seite ein einstückig angeformtes, zylindrisches Anschlussende aufweist. Gerade motorseitig kann jedoch auch eine an sich bekannte Klemmverbindung vorteilhaft sein, mit der dann gleichzeitig eine Trennstelle zwischen Abgasanlage und Turbolader bzw. Krümmer erreicht wird.

Um dem Balg eine erhöhte innere Dämpfung zu geben, kann vorgesehen sein, dass der Balg mehrwandig ausgebildet ist, wobei eine drei- oder vierwandige Ausbildung vorteilhaft ist, die die innere Dämpfung aus der gegenseitigen Reibung der einzelnen Wandlagen ergibt. Zusätzlich kann dann auch noch vorgesehen sein, die Wandlagen des Balges aus unterschiedlichen Materialien herzustellen, um die Dämpfungseigenschaften eines jeweiligen Materials zu nutzen. Wesentlich ist dabei nur die Beachtung der Forderung danach, dass das Bauteil die notwendige Temperatur- und Korrosionsbeständigkeit hinsichtlich von innen und außen einwirkender Einflüsse hat.

Was die Steifigkeit des Balges betrifft, so weist der Balg eine Axialsteifigkeit im Bereich von 1 KN/mm auf.

Der schwingungsdämpfende Gestrickemantel kann mehrlagig bzw. als hohlzylindrisches Gestrickekissen ausgebildet sein, wobei vorgesehen sein kann, dass die Bohrungswandung des Gestrickemantels ein der Form der Wellenberge des Balges angepasste Profilierung aufweist. Diese den gegenseitigen Formschluss unterstützende Profilierung kann bei der Herstellung des Gestrickemantels aufgeprägt werden, wonach sich der Gestrickemantel vermöge seiner Elastizität trotzdem noch auf den Balg aufschieben lässt. Die radiale Dicke des Gestrickemantels bzw. des Gestrickekissens kann im Bereich von 2 bis 5 mm, vorzugsweise im Bereich von 2 bis 3 mm liegen. Auch hinsichtlich des Gestrickemantels kann vorgesehen sein, dass dieser aus Drähten bzw. Fäden unterschiedlichen Materials besteht, wobei die Kombination von Drähten aus temperatur- und korrosionsfestem Stahl, Drähten aus Kupfer und/oder Fäden aus Glasfaser und/oder Wolfram und/oder Glasseide in Frage kommt. Zum Schutz des Gestrickemantels kann es zweckmäßig sein, diesen mit einer festen Umhüllung zu umgeben, beispielsweise aus einem Drahtgeflecht oder in Form eines Mantels aus dünnem Blech.

Weiterhin kann vorgesehen sein, dass der Balg ausgehend von seinem motornäheren Ende ein gegenüber den Innenwellen des Balges berührungsloses Innenschutzrohr aus temperatur- und korrosionsbeständigem Material aufweist, um in an sich bekannter Weise einen glatten Abgasstrom und einen Temperaturschutz für den Balg zu erreichen.

Es wurde bereits erwähnt, dass das erfindungsgemäße Leitungselement zusätzlich zu dem bekannten flexiblen Zwischenstück vorgesehen werden kann. In diesem Zusammenhang ist es vorteilhaft, das erfindungsgemäße Leitungselement in größtmöglicher Motornähe innerhalb der Abgasleitung, also in Strömungsrichtung des Abgases gesehen vor dem flexiblen Zwischenstück anzuordnen, bei Anwendung eines Turboladers also unmittelbar hinter dem Turbolader.

Weitere erfindungswesentliche Merkmale und Einzelheiten ergeben sich aus der nachfolgenden Beschreibung von Ausführungsformen, die auf der Zeichnung dargestellt ist. In der Zeichnung zeigen:
Figur 1 ein Leitungselement, teilweise im Längsschnitt, und
Figur 2 eine Abwandlung des Leitungselementes gemäß Figur 1.

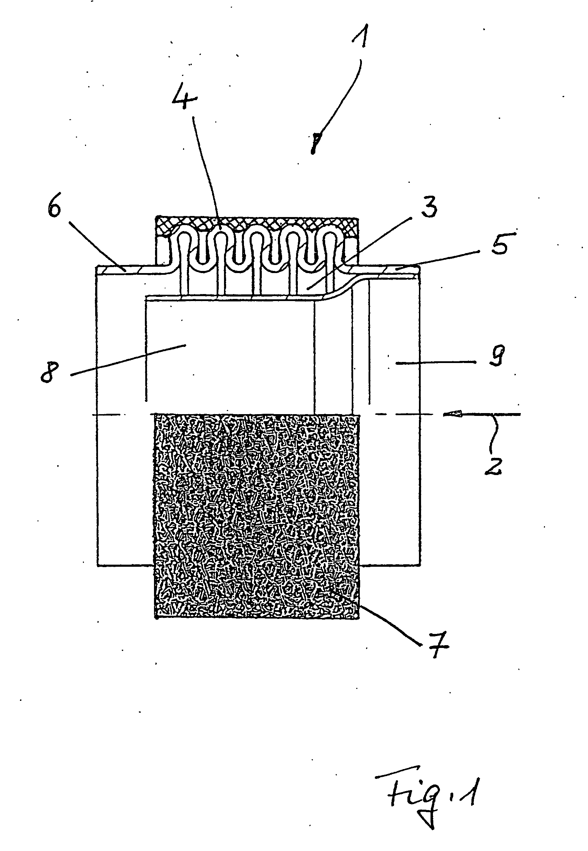

Figur 1 zeigt ein insgesamt mit der Ziffer 1 versehenes Leitungselement für Abgasleitungen von Kraftfahrzeugen, das vom Abgas in Richtung des Pfeiles 2 durchströmt wird.

Das in Axialrichtung kurze Leitungselement besteht im Wesentlichen aus einem Metallbalg 3 aus temperatur- und korrosionsbeständigem Material mit fünf axial nebeneinander sitzenden Ringwellen 4, wobei die äußeren Ringwellen 4 in einstückig angeformte hohlzylindrische Anschlussstutzen 5, 6 übergehen. Über die freien Enden dieser Anschlussstutzen 5, 6 kann das Leitungselement 1 mit den weiterführenden Teilen der nicht dargestellten Abgasleitung verschweißt sein.

Auf die Wellen 4 des Balges 3 ist ein Gestrickemantel 7 aufgesetzt, dessen Innenquerschnitt so knapp bemessen ist, dass er mit den radial außen liegenden Bergen der Wellen 4 in kraft- und formschlüssige Verbindung tritt, wobei das Material des Gestrickemantels 7 zwischen den Bergen der Wellen 4 etwas nach radial innen ragt. Um diesen Formschluss noch zu unterstützen, kann der Gestrickemantel 7 bei der Vorfertigung auf der Innenseite mit einer entsprechenden wellenförmigen Einprägung versehen sein, was vermöge der Elastizität des Gestrickemantels 7 seine Montage auf dem Balg durch Aufschieben nicht hindert.

Durch innere Reibung des den Gestrickemantel bildenden Drahtmaterials, durch Reibung zwischen Balg 3 und Gestrickemantel 7 sowie die elastischen Bewegungen der Wellen 4 des Balges 3 gegeneinander ist das dargestellte Leitungselement in der Lage, hochfrequente Schwingungen an der Fortpflanzung zu hindern, also gegenüber dem stromabwärts liegenden Teil der Abgasanlage abzukoppeln. Um diese Dämpfungswirkung noch zu erhöhen, kann es zweckmäßig sein, den Balg 3 mehrwandig bzw. mehrlagig auszubilden, sodass auch durch Reibung zwischen den einzelnen Balglagen eine Dämpfungswirkung eintritt, wobei diese Dämpfungswirkung zusätzlich durch die Wahl des Materials für die einzelnen Balglagen beeinflusst werden kann. Gleichermaßen kann für den Gestrickemantel 7 die Mischung unterschiedlichen Draht- und Fadenmaterials vorgesehen werden.

Wie aus der Zeichnung ersichtlich, ist in den Balg 3 noch ein sogenanntes Innenschutzrohr 8 eingesetzt, das auf der Abgaszustrittsseite mit einer radialen Aufweitung 9 innerhalb des dortigen Anschlussstutzens 5 beispielsweise durch Schweißen festgelegt ist und das im Übrigen aber soviel radialen Abstand von den Balgwellen hat, dass es mit diesen nicht in Berührung treten kann. Dieses Innenschutzrohr 8 glättet den Abgasstrom und bildet im Übrigen für den Balg 3 einen Schutz gegen die hohen Abgastemperaturen.

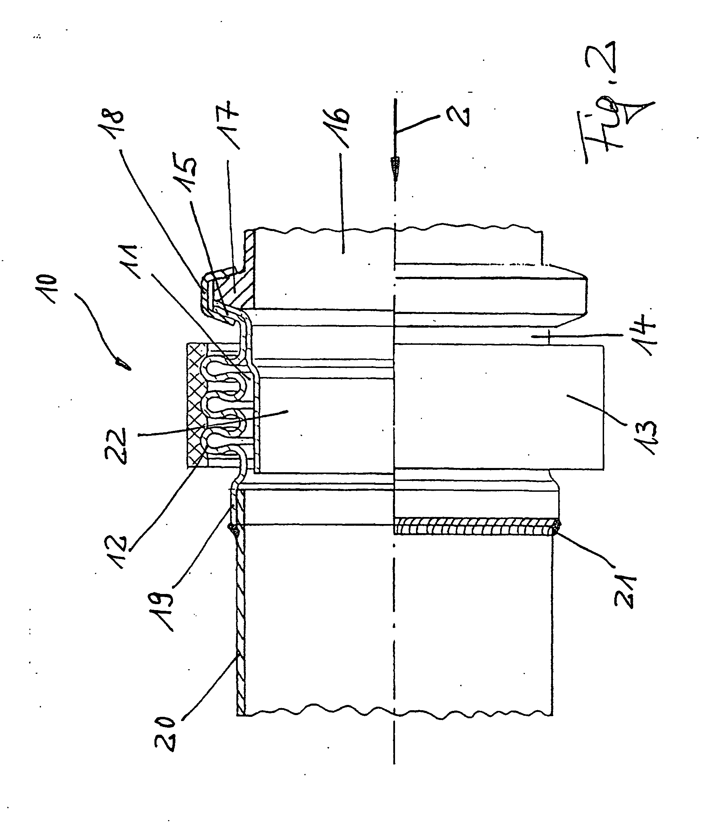

. Figur 2 zeigt eine abgewandelte Ausführungsform des Gegenstandes gemäß Figur 1 mit einem insgesamt mit der Ziffer 10 versehenen Leitungselement, das vom Abgas wiederum in Richtung des Pfeiles 2 durchströmt wird.

Das Leitungselement besteht im wesentlichen aus einem Metallbalg 11, der hier nur drei Ringwellen 12 aufweist. Auf die Wellen 12 des Balges 11 ist wiederum ein Gestrickemantel 13 der bereits beschriebenen Art aufgesetzt, weshalb insoweit auf die Beschreibung des Gegenstandes gemäß Figur 1 verwiesen wird.

Gemäß Figur 2 weist jedoch der Balg 11 einstückig angeformt ein zylindrisches Anschlußende 14 auf, das endständig mit einer konischen Aufbördelung 15 versehen ist. Andererseits hat das weiterführende Leitungsteil 16 entständig einen umlaufenden Anschlußwulst 17, der eine zur Aufbördelung 15 passende, konische Abschlußfläche aufweist. Mit Hilfe einer Spannschelle 18 mit im wesentlichen V-förmigem Querschnitt sind Aufbördelung 15 und Wulst 17 gasdicht miteinander verspannt.

Am anderen Ende des Balges 11 ist ähnlich zur Ausführungsform gemäß Figur 1 einstückig angeformt ein hohlzylindrischer Anschlußstutzen 19 vorhanden, der endständig etwas aufgeweitet ist, so daß das weiterführende Leitungsteil 20 in die Aufweitung eingesteckt und bei 21 mit dem Anschlußstutzen 19 verschweißt werden kann.

Auch die Ausführungsform gemäß Figur 2 weist ein Innenschutzrohr 22 auf, das endständig entsprechend der Aufbördelung 15 aufgebogen und dort in die Spannverbindung mit dem Wulst 17 einbezogen ist.

Bei beiden anhand der Figuren 1 und 2 geschilderten Ausführungsformen kann in nicht dargestellter Weise der Gestrickemantel 7 bzw. 13 noch von einer festen Umhüllung umgeben sein, die ihn vor äußerer Beeinträchtigung bzw. einer Formänderung während des Betriebes schützt. Diese Umhüllung kann durch einen Geflechts- oder Gestrickemantel gebildet sein oder auch durch wenigstens eine Bandage aus dünnem Blech, wobei das Blech auch Perforationen ähnlich wie beispielsweise bei Streckmetall aufweisen kann.

## Patentansprüche

1. Leitungselement aus Metall zur Abkopplung hochfrequenter Schwingungen bei Abgasleitungen von Kraftfahrzeug-Verbrennungsmotoren, mit einem in die Abgasleitung eingesetzten, schraubengangförmig oder ringgewellten Balg
(3, 11) und einem auf den gewellten Balgabschnitt kraft- oder formschlüssig aufgesetzten Gestrickemantel (7, 13),
**dadurch gekennzeichnet,**
**dass** der Balg (3, 11) kurz und mit hoher Steifigkeit ausgebildet ist, und zwar solcherart, dass die Wellenzahl des Balges (3, 11) im Bereich von zwei bis sieben Wellen (4, 12) liegt und dass der Balg (3, 11) eine Axialsteifigkeit im Bereich von 1 kN/mm aufweist.

2. Leitungselement nach Anspruch 1,
**dadurch gekennzeichnet,**
**dass** die Gesamtwandstärke des Balges (3, 11) im Bereich von 0,7 bis 1,6 mm liegt.

3. Leitungselement nach einem der vorhergehenden Ansprüche,
**dadurch gekennzeichnet,**
**dass** der Balg (3, 11) auf wenigstens einer Seite ein einstückig angeformtes, zylindrisches Anschlussende (5, 6, 19) aufweist.

4. Leitungselement nach einem der vorhergehenden Ansprüche,
**dadurch gekennzeichnet,**
**dass** der Balg (3, 11) mehrwandig ausgebildet ist.

5. Leitungselement nach Anspruch 4,
**dadurch gekennzeichnet,**
**dass** die einzelnen Wandlagen des Balges (3, 11) aus unterschiedlichem Material bestehen.

6. Leitungselement nach einem der vorhergehenden Ansprüche,
**dadurch gekennzeichnet,**
**dass** der Gestrickemantel (7, 13) mehrlagig bzw. als hohlzylindrisches Gestrickekissen ausgebildet ist.

7. Leitungselement nach Anspruch 6,
**dadurch gekennzeichnet,**
**dass** die Bohrungswandung des Gestrickemantels (7, 13) eine der Form der Wellenberge des Balges (3, 11) angepasste Profilierung aufweist.

8. Leitungselement nach Anspruch 6 oder 7,
**dadurch gekennzeichnet,**
**dass** der Gestrickemantel (7, 13) bzw. das Gestrickekissen eine Dicke im Bereich von 2 bis 5 mm, vorzugsweise von 2 bis 3 mm aufweist.

9. Leitungselement nach einem der vorhergehenden Ansprüche,
**dadurch gekennzeichnet,**
**dass** der Gestrickemantel (7, 13) aus Drähten bzw. Fäden unterschiedlichen Materials besteht.

10. Leitungselement nach Anspruch 9,
**dadurch gekennzeichnet,**
**dass** Drähten aus temperatur- und korrosionsfestem Stahl, Drähte aus Kupfer und/oder Fäden aus Glasfaser und/oder Wolfram und/oder Glasseide beigemischt sind.

11. Leitungselement nach einem der vorhergehenden Ansprüche,
**dadurch gekennzeichnet,**
**dass** der Balg (3, 11) ausgehend von einem motornäheren Ende (5, 14) ein gegenüber den Innenwellen des Balges (3, 11) berührungsloses Innenschutzrohr (8, 22) aus temperatur- und korrosionsbeständigem Material aufweist.

12. Leitungselement nach Anspruch 11,
**dadurch gekennzeichnet,**
**dass** das Innenschutzrohr (8, 22) in bzw. an dem zugeordneten Balganschlussende (5, 14) festgelegt ist.

13. Leitungselement nach einem der vorhergehenden Ansprüche,
**dadurch gekennzeichnet,**
**dass** ein auf einer Seite des Balges (11) einstückig angeformtes, zylindrisches Anschlußende (14) an das weiterführende Teil (16) der Abgasleitung mittels einer Klemmverbindung angeschlossen ist.

14. Leitungselement nach Anspruch 13,
**dadurch gekennzeichnet,**
**dass** das Anschlußende (14) endständig zu einem konisch vom gewellten Bereich des Balges fort gerichteten, umlaufenden Bund (15) aufgebördelt ist, daß das weiterführende Teil (16) der Abgasleitung einen umlaufenden Anschlußwulst (17) mit einer passenden konischen Anlagefläche für den Bund (15) aufweist, und daß der Bund (15) durch eine Spannschelle (18) mit im wesentlichen V-förmigen Querschnitt mit dem Wulst (17) verspannt ist.

15. Leitungselement nach einem der vorstehenden Ansprüche,
**dadurch gekennzeichnet,**
**dass** der Gestrickemantel (7, 13) von einer festen Umhüllung umgeben ist.

16. Leitungselement nach Anspruch 15,
**dadurch gekennzeichnet,**
**dass** die Umhüllung durch ein Geflecht, Gestricke, wenigstens eine Bandage aus dünnem Blech oder eine Bandage aus dünnem, perforiertem Blech gebildet ist.

## Claims

1. Duct element of metal for decoupling high-frequency vibrations in exhaust gas ducts of internal combustion engines of motor vehicles, having a helically or annularly corrugated bellows (3, 11), which is installed in the exhaust gas duct, and a knitted mesh jacket (7, 13) which is positively or non-positively mounted on the corrugated bellows portion,
**characterised in that**
the bellows (3, 11) is of short and highly rigid construction, its structure being such that the number of corrugations of the bellows (3, 11) is in the range of from two to seven corrugations (4, 12); and the bellows (3, 11) has an axial rigidity in the region of 1 kN/mm.

2. Duct element according to claim 1,
**characterised in that**
the total wall thickness of the bellows (3, 11) is in the range of from 0.7 to 1.6 mm.

3. Duct element according to either one of the preceding claims,
**characterised in that**
the bellows (3, 11) has, on at least one end, an integrally formed, cylindrical connection end (5, 6, 19).

4. Duct element according to any one of the preceding claims,
**characterised in that**
the bellows (3, 11) is of multi-walled construction.

5. Duct element according to claim 4,
**characterised in that**
the individual wall layers of the bellows (3, 11) consist of different materials.

6. Duct element according to any one of the preceding claims,
**characterised in that**
the knitted mesh jacket (7, 13) is multi-layered or is in the form of a hollow-cylindrical knitted mesh pad.

7. Duct element according to claim 6,
**characterised in that**
the wall of the bore in the knitted mesh jacket (7, 13) is contoured to match the shape of the corrugation peaks of the bellows (3, 11).

8. Duct element according to claim 6 or 7,
**characterised in that**
the thickness of the knitted mesh jacket (7, 13) or the knitted mesh pad is in the range of from 2 to 5 mm, preferably from 2 to 3 mm.

9. Duct element according to any one of the preceding claims,
**characterised in that**
the knitted mesh jacket (7, 13) consists of wires or threads of different materials.

10. Duct element according to claim 9,
**characterised in that**
wires of temperature- and corrosion-resistant steel, wires of copper and/or threads of glass fibres and/or tungsten and/or glass silk are admixed.

11. Duct element according to any one of the preceding claims,
**characterised in that**
the bellows (3, 11) has, starting from an end (5, 14) nearer the engine, an inner protective pipe (8, 22) of temperature- and corrosion-resistant material, which pipe does not make contact with the internal corrugations of the bellows (3, 11).

12. Duct element according to claim 11,
**characterised in that**
the inner protective pipe (8, 22) is fixed in or on the associated connection end (5, 14) of the bellows.

13. Duct element according to any one of the preceding claims,
**characterised in that**
a cylindrical connection end (14), which is formed integrally on an end of the bellows (11), is connected to the ongoing portion (16) of the exhaust gas duct by means of a clamped connection.

14. Duct element according to claim 13,
**characterised in that**
the connection end (14) is flared at the end to form a circumferential collar (15) which flares conically in the direction away from the corrugated region of the bellows; the ongoing portion (16) of the exhaust gas duct has a circumferential connection bead (17) having a matching conical contact surface for the collar (15); and the collar (15) is clamped together with the bead (17) by means of a tensioning clip (18) of substantially V-shaped cross-section.

15. Duct element according to any one of the preceding claims,
**characterised in that**
the knitted mesh jacket (7, 13) is surrounded by a solid covering.

16. Duct element according to claim 15,
**characterised in that**
the covering is formed by a braid, a knitted mesh, at least one band of thin sheet metal or a band of thin, perforated sheet metal.

## Revendications

1. Elément de tuyau en métal pour le découplage de vibrations de haute fréquence dans des conduites de gaz d'échappement de moteurs à combustion interne de véhicules automobiles, comprenant un soufflet (3, 11) de configuration hélicoïdale ou à ondulations annulaires, intégré dans la conduite des gaz d'échappement,
et une enveloppe tricotée (7, 13) mise en place sur le tronçon de soufflet ondulé, mécaniquement ou par concordance de formes,
**caractérisé par le fait**
**que** le soufflet (3, 11) est de réalisation courte et à rigidité élevée, plus précisément de façon telle que le nombre d'ondulations individuelles dudit soufflet (3, 11) se situe dans la plage comprise entre deux et sept ondulations (4, 12) ; et par le fait que le soufflet (3, 11) présente une rigidité axiale de l'ordre de 1 kN/mm.

2. Elément de tuyau selon la revendication 1,
**caractérisé par le fait**
**que** l'épaisseur totale de paroi du soufflet (3, 11) se situe dans la plage de 0,7 à 1,6 mm.

3. Elément de tuyau selon l'une des revendications précédentes,
**caractérisé par le fait**
**que** le soufflet (3, 11) comporte, sur au moins un côté, une extrémité cylindrique de raccordement (5, 6, 19) rapportée d'un seul tenant.

4. Elément de tuyau selon l'une des revendications précédentes,
**caractérisé par le fait**
**que** le soufflet (3, 11) est réalisé à plusieurs parois.

5. Elément de tuyau selon la revendication 4,
**caractérisé par le fait**
**que** les couches individuelles de la paroi du soufflet (3, 11) consistent en des matériaux différents.

6. Elément de tuyau selon l'une des revendications précédentes,
**caractérisé par le fait**
**que** l'enveloppe tricotée (7, 13) est respectivement réalisée à plusieurs couches, ou sous la forme d'un coussin tricoté cylindrique creux.

7. Elément de tuyau selon la revendication 6,
**caractérisé par le fait**
**que** la paroi des perçages de l'enveloppe tricotée (7, 13) possède un profilage adapté à la forme des crêtes des ondulations du soufflet (3, 11).

8. Elément de tuyau selon la revendication 6 ou 7,
**caractérisé par le fait**
**que** l'enveloppe tricotée (7, 13) ou le coussin tricoté présente, respectivement, une épaisseur située dans la plage de 2 à 5 mm, de préférence de 2 à 3 mm.

9. Elément de tuyau selon l'une des revendications précédentes,
**caractérisé par le fait**
**que** l'enveloppe tricotée (7, 13) est respectivement constituée par des fils métalliques ou des fils en des matériaux différents.

10. Elément de tuyau selon la revendication 9,
**caractérisé**
**par** une adjonction de fils métalliques en de l'acier thermorésistant et résistant à la corrosion, de fils métalliques en cuivre et/ou de fils en de la fibre de verre et/ou du tungstène et/ou de la soie de verre.

11. Elément de tuyau selon l'une des revendications précédentes,
**caractérisé par le fait**
**que** le soufflet (3, 11) comporte, à partir d'une extrémité (5, 14) proche du moteur, un tube protecteur intérieur (8, 22) en un matériau thermorésistant et résistant à la corrosion, exempt de contact vis-à-vis des ondulations intérieures dudit soufflet (3, 11).

12. Elément de tuyau selon la revendication 11,
**caractérisé par le fait**
**que** le tube protecteur intérieur (8, 22) est respectivement consigné à demeure dans ou sur l'extrémité associée (5, 14) de raccordement du soufflet.

13. Elément de tuyau selon l'une des revendications précédentes,
**caractérisé par le fait**
**qu'**une extrémité cylindrique de raccordement (14), rapportée d'un seul tenant sur un côté du soufflet (11), est raccordée à la partie de continuation (16) de la conduite des gaz d'échappement, au moyen d'une solidarisation par coincement.

14. Elément de tuyau selon la revendication 13,
**caractérisé par le fait**
**que** l'extrémité de raccordement (14) est relevée, dans la zone extrême, pour former un collet périphérique (15) s'éloignant tronconiquement de la région ondulée du soufflet ; par le fait que la partie de continuation (16) de la conduite des gaz d'échappement présente un bourrelet périphérique de raccordement (17) muni d'une surface tronconique de contact s'adaptant au collet (15) ; et par le fait que ledit collet (15) est bloqué sur le bourrelet (17) par l'intermédiaire d'un collier de serrage (18) de section transversale sensiblement configurée en V.

15. Elément de tuyau selon l'une des revendications précédentes,
**caractérisé par le fait**
**que** l'enveloppe tricotée (7, 13) est entourée d'un enrobage rigide.

16. Elément de tuyau selon la revendication 15,
**caractérisé par le fait**
**que** l'enrobage est constitué d'un tissage, d'un tricot, d'au moins un bandage en tôle mince, ou d'un bandage en tôle perforée mince.
